(19) Europäisches Patentamt
European Patent Office
Office européen des brevets

(11) Numéro de publication: **0 017 193**
**B1**

# (12) FASCICULE DE BREVET EUROPEEN

(45) Date de publication du fascicule du brevet: **23.11.83**

(51) Int. Cl.³: **A 01 C 1/06**, A 01 N 59/06

(21) Numéro de dépôt: **80101682.5**

(22) Date de dépôt: **27.03.80**

(54) **Procédé pour l'obtention de semences enrobées.**

(30) Priorité: **02.04.79 FR 7908425**
**11.01.80 FR 8000773**

(43) Date de publication de la demande:
**15.10.80 Bulletin 80/21**

(45) Mention de la délivrance du brevet:
**23.11.83 Bulletin 83/47**

(84) Etats contractants désignés:
**AT BE CH DE FR GB IT LU NL SE**

(56) Documents cités:
FR - A - 1 424 739
FR - A - 2 035 957
FR - A - 2 071 376
FR - A - 2 316 855
LU - A - 75 993
US - A - 3 808 740
US - A - 3 973 355

(73) Titulaire: **INTEROX Société anonyme dite:**
**Rue du Prince Albert, 33**
**B-1050 Bruxelles (BE)**

(72) Inventeur: **Gago, Ignace**
**Chaussée de Nivelles, 53**
**B-1420 Braine-l'Alleud (BE)**
Inventeur: **Coppens, Guillaume**
**Avenue Louis Jasmin, 89**
**B-1150 Bruxelles (BE)**

(74) Mandataire: **Meyers, Liliane et al,**
**Solvay & Cie Département de la propriété industrielle 310, rue de Ransbeek**
**B-1120 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 017 193 B1

Courier Press, Leamington Spa, England.

Procédé pour l'obtention de semences enrobées

La présente invention concerne un procédé pour l'obtention de semences enrobées.

La plupart des méthodes de culture sont d'un rendement très incertain. Ainsi, lorsqu'on réalise directement des semis en champs, il arrive que se produise une germination précoce, avant que l'humidité ambiante moyenne soit suffisante pour assurer la croissance normale des jeunes plants, ce qui entraîne des réductions importantes des rendements. Ce phénomène est particulièrement sensible pour des semences mal protégées, notamment celles qui ont un germe apparent.

Pour améliorer le rendement, on peut avoir recours à des techniques de repiquage. Dans ce cas, on met en oeuvre de jeunes plants vigoureux et bien développés et on ménage des temps de croissance les plus longs possibles. Pour atteindre ces objectifs, on procède à des semis précoces et on sélectionne les conditions optimales de température et de taux d'humidité permettant d'obtenir une germination rapide et concomitante des semences. Cependant, ces techniques sont en général peu économiques et ne permettent que peu souvent d'obtenir des rendements quantitatifs, soit parce que les semences ne germent pas, soit parce que certaines semences germent avec retard.

Par ailleurs, au cours du stockage des semences, il se produit des pertes importantes dues en général à une humidité ambiante trop élevée ou à une mauvaise aération des silos.

Une technique connue pour améliorer les taux de germination de certaines semences ou pour leur donner une forme et des dimensions permettant le semis mécanique consiste à les enrober à l'aide de divers types d'enrobants. On a ainsi proposé, dans la demande de brevet LU—A—75993 (INTEROX), d'incorporer du peroxyde de calcium à un enrobant pouvant contenir un adhésif tel que les méthylcelluloses, les alcools polyvinyliques, la gomme arabique, l'amidon soluble et la gélatine, pour améliorer le pouvoir germinatif des semences de betteraves. Cette technique, qui s'est révélée efficace, n'est pas directement transposable à d'autres semences de formes régulières notamment parce que l'enrobant n'adhère pas convenablement à la semence.

Ce manque d'adhérence est particulièrement sensible pour les semences mal protégées.

En effet, au cours de l'enrobage, on observe fréquemment un gonflement important de certaines semences dû à l'absorption d'eau. Après séchage, la semence se contracte pour reprendre sa dimension initiale tandis que l'enrobant ne se contracte en général pas dans les mêmes proportions; de ce fait il n'adhère plus convenablement à la semence et il se fragilise ou se délite. Dans certains cas, il est difficile de sécher correctement la semence sous la couche d'enrobant ce qui entraîne des risques de dégradation au cours du stockage. Ces effets sont particulièrement sensibles lorsque les semences mises en oeuvre sont des semences de légumineuses, de maïs et de crucifères. En outre, certains enrobants, qui dans l'ensemble présentent des propriétés intéressantes, peuvent avoir des effets secondaires de phytotoxicité pour certaines semences. Enfin, dans certain cas, il est malaisé d'enrober les semences de manière uniforme car leurs surfaces sont peu régulières et ne permettent pas un accrochage uniforme des enrobants.

On a aussi proposé, dans le brevet US—A—3 973 355 (AGRITEC Co), d'encapsuler des semences par une composition contenant un gel de polymères pontés insolubles dans l'eau de manière à former des matrices hydrophiles et à fixer ainsi l'humidité. Cette technique présente l'inconvénient de provoquer des germinations prématurées lorsque les semences sont soumises à une humidité ambiante trop élevée au cours du stockage.

La présente invention vise à procurer un procédé pour l'obtention de semences enrobées qui ne présente pas les inconvénients des procédés connus et qui permet notamment d'éviter tous les inconvénients liés à une pénétration prématurée d'humidité dans la semence. Ce procédé permet d'améliorer l'adhérence de l'enrobant aux semences et sa solidité, d'éviter le gonflement intempestif des semences au cours de l'enrobage, de préserver les semences des effets phytotoxiques secondaires de certains enrobants, d'éviter une germination précoce des semences et d'améliorer la tenue des semences enrobées au stockage.

L'invention conduit en outre à une amélioration supplémentaire sensible du taux de germination des semences, à une réduction du temps nécessaire à l'émergence des germes, et à un effet fongicide et désinfectant.

La présente invention concerne à cet effet un procédé pour l'obtention de semences enrobées au moyen d'un enrobant contenant un composé hydrophile selon lequel on traite les semences au moyen d'une solution aqueuse que contient un agent capable de limiter le gonflement des semences, ou au moyen d'une phase aqueuse qui contient un agent capable de former à la surface des semences un film imperméable à l'eau, on enrobe les semences ainsi traitées avec un enrobant contenant un composé peroxydé et un polymère hydrophile et on sèche les semences enrobées ainsi obtenues.

Tous les types de composés peroxydés organiques ou inorganiques peuvent être mis en oeuvre dans l'enrobant des semences selon l'invention. Parmi les composés peroxydés organiques pouvant être utilisés, figurent des composés tels que le peroxyde de benzoyle et ses dérivés halogénés, les perbenzoates d'alkyle comme le perbenzoate de tert-butyle, l'hydroperoxyde de p-menthane ainsi que les produits d'addition du peroxyde d'hydrogène comme le peroxyde d'urée. Les composés peroxydés inorganiques sont en général choisis parmi les persels tels que les perborates, percarbonates, persulfates, perphosphates de métaux alcalins ou alcalino-terreux et les peroxydes métalliques. Le plus

souvent, on préfère utiliser des composés peroxydés inorganiques tels que les peroxydes métalliques plus particulièrement des peroxydes de métaux alcalino-terreux. De très bons résultats ont été obtenus en utilisant les peroxydes de calcium ou de magnésium.

La quantité de composé peroxydé présente dans l'enrobant peut varier dans de larges limites. Elle est en général comprise entre 0,1 et 99% du poids total de l'enrobant. Le plus souvent l'enrobant contient de 1 à 90% en poids de composé peroxydé. De bons résultats ont été obtenus avec des enrobants contenant de 10 à 80% en poids de composé peroxydé.

Divers types de polymères hydrophiles peuvent être mis en oeuvre dans l'enrobant selon l'invention.

Par polymère hydrophile, on entend désigner tous les composés organiques polymériques qui contiennent essentiellement des unités monomériques comportant des groupes hydrophiles.

Les polymères hydrophiles que contient l'enrobant sont en général choisis parmi les polymères comportant une chaîne principale contenant des atomes de carbone substitués directement ou indirectement par au moins un groupe hydroxyle —OH, carboxyle —COO— ou carbamyle —CON<. Ils peuvent en outre être substitués par un ou plusieurs autres substituants tels que des atomes d'halogène ou des groupes hydrocarbonés. La chaîne principale du polymère peut contenir certains hétéroatomes tels que l'oxygène et l'azote. De bons résultats sont obtenus avec les polymères dont la chaîne principale est constituée essentiellement d'atomes de carbone et éventuellement d'atomes d'oxygène.

Les polymères hydrophiles peuvent être substitués par des groupes hydroxyles —OH. On peut ainsi utiliser comme adhésifs des polymères dérivés des aldoses substitués ou non. On peut aussi utiliser la cellulose, l'amidon et leurs dérivés substitués. De bons résultats ont été obtenus avec des alkylhydroxyalkylcelluloses telles que les méthylhydroxyéthylcelluloses et les méthylhydroxypropylcelluloses. D'autres dérivés de la cellulose tels que les méthylcelluloses et les carboxyméthylcelluloses conviennent également.

Avantageusement, les polymères hydrophiles utilisés selon l'invention peuvent être substitués directement ou indirectement par des groupes carboxyles —COO— ou carbamyles —CON<. Ils peuvent ainsi être substitués par des groupes $R_1$—COO—, —COO—$R_2$, —CON$R_3R_4$, $R_5$—CON($R_3$)—,

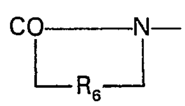

ou des chaînes alkylées —$R_7$— elles-mêmes substituées par un ou plusieurs de ces groupes, dans lesquels $R_1$ et $R_5$ représentent un groupement hydrocarboné éventuellement substitué contenant de 1 à 6 atomes de carbone, $R_2$ représente un atome d'hydrogène un atome de métal alcalin tel que le sodium ou le potassium, un atome de métal alcalino-terreux, tel que le calcium ou le magnésium, un groupement ammonium ou un groupement tel que $R_1$, $R_3$ et $R_4$ représentent un atome d'hydrogène ou un groupement tel que $R_1$, $R_6$ représente une chaîne carbonée contenant 3 ou 4 atomes de carbone et $R_7$ représente une chaîne alkylée contenant de 1 à 40 atomes de carbone.

Les polymères hydrophiles utilisés selon l'invention peuvent ainsi avantageusement être substitués par un ou plusieurs groupes choisis parmi les groupes

—O—CO—$CH_3$

—COOM où M représente un atome d'hydrogène, un atome de métal alcalin tel que le sodium ou le potassium, un atome de métal alcalino-terreux tel que le magnésium ou le calcium ou un groupement ammonium

—COO—$(CH_2)_n$—H où n est un nombre entier de 1 à 3,

—$(CH_2$—$CH)_{n'}$—H où n' est un nombre entier de 1 à 10,
CONH$_2$

—$(CH_2$—$CH)_{n'}$—H où n' est un nombre entier de 1 à 10 et M a la même signification que ci-dessus, et
COOM

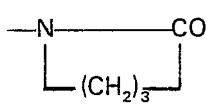

La chaîne principale des polymères hydrophiles utilisés selon l'invention peut contenir des atomes d'oxygène. Dans ce cas les polymères sont avantageusement choisis parmi les dérivés substitués par

des groupes carboxyles ou carbamyles tels que définis ci-dessus de la cellulose, des alkylcelluloses et de l'amidon.

De bons résultats ont été obtenus avec les produits de greffage de nitrile acrylique sur l'amidon hydrolysés, appelés également super-absorbants, tels que ceux décrits dans le brevet Etats-Unis 3 935 099 déposé le 3 avril 1974 et cédé à l'U.S. Secret. of Agriculture.

Les polymères hydrophiles que contient l'enrobant peuvent ne pas comporter d'hétéroatomes dans leur chaîne principale. Dans ce cas, ils peuvent ne pas comporter d'autres substituants que les groupes carboxyles ou carbamyles. Ils peuvent alors être choisis notamment parmi les homo- et les copolymères de la vinylpyrrolidone, des esters vinyliques et de l'acide acrylique, et de ses dérivés tels que ses sels et ses esters, plus particulièrement les sels de sodium et les esters d'alcools aliphatiques en $C_1$—$C_3$. De bons résultats ont été obtenus avec la polyvinylpyrrolidone, l'acétate de polyvinyle, le polyacrylate de sodium. Les meilleurs résultats ont été obtenus avec la polyvinylpyrrolidone.

On peut avantageusement utiliser une composition de polymères hydrophiles contenant à la fois des groupes hydroxyles —OH et des groupes carboxyles —COO— ou carbamyles —CON<.

On peut ainsi utiliser de façon avantageuse un mélange de polymères substitués par des groupes hydroxyles —OH avec des polymères substitués par des groupes carboxyles —COO—. De bons résultats ont ainsi été obtenus en utilisant des mélanges d'esters polyvinyliques totalement ou partiellement hydrolysés avec des polymères carboxylés tels que des polyacrylates. De tels mélanges contiennent avantageusement l'ester et le polymère carboxylé dans un rapport pondéral compris entre 10:1 et 1:10.

Les polymères hydrophiles substitués par des groupes carboxyles et carbamyles de l'invention peuvent aussi avantageusement être substitués simultanément par des groupes hydroxyles. Parmi ces polymères particulièrs, les polymères hydroxycarbonylés conviennent particulièrement bien.

Les polymères hydroxycarboxylés sont en général choisis parmi les esters polyvinyliques partiellement hydrolysés tels les acétates de polyvinyle, dont moins de 90% et de préférence de 40 à 90% des fonctions esters sont hydrolysées, et les polymères contenant des carbones substitués à la fois par des groupes hydroxyles et carboxyles.

Des polymères hydroxycarboxylés particulièrement adéquats sont ceux qui contiennent des unités monomériques de formule

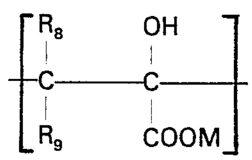

où $R_8$ et $R_9$ représentent l'hydrogène ou un groupement alkyle comprenant de 1 à 3 atomes de carbone pouvant être substitués par un groupe hydroxyle ou par un atome d'halogène, $R_8$ et $R_9$ pouvant être identiques ou différents, et où M a la même signification que ci-dessus. Les polymères de ce type utilisés de préférence selon l'invention sont les polymères tels que définis ci-dessus pour lesquels $R_8$ et $R_9$ représentent l'hydrogène ou un groupement méthyle, $R_8$ et $R_9$ pouvant être identiques ou différents. Les meilleurs résultats ont été obtenus avec les polymères où $R_8$ et $R_9$ représentent l'hydrogène. Les polymères de ce type sont des homopolymères ou des copolymères contenant des unités telles que définies ci-dessus, du même type ou de plusieurs types différents. Lorsqu'on utilise des copolymères, on les choisit le plus souvent parmi ceux qui contiennent au moins 20% d'unités telles que définies ci-dessus et, de préférence, parmi ceux qui contiennent au moins 50% de pareilles unités. Les meilleurs résultats ont été obtenus avec les polymères qui ne contiennent que des unités telles que définies ci-dessus.

Lorsque le polymère hydrophile est choisi parmi les polymères hydroxycarboxylés, ceux-ci peuvent être mis en oeuvre sous forme de sels d'acides polyhydroxycarboxyliques ou sous forme d'acides polyhydroxycarboxyliques. Dans ce dernier cas, on peut les mettre en oeuvre sous la forme des polylactones correspondantes. De préférence, les polymères hydroxycarboxylés utilisables selon l'invention sont mis en oeuvre sous forme de polylactones. Ces acides polyhydroxycarboxyliques peuvent être lactonisés à des degrés divers. En général, on utilise des acides polyhydroxycarboxyliques dont plus de 30% des fonctions carboxyles sont lactonisées. De bons résultats ont été obtenus avec la polylactone dérivée de l'acide poly-alpha-hydroxyacrylique.

Lorsque le polymère hydrophile contenu dans l'enrobant est un acide polyhydroxycarboxylique ou a polylactone qui en dérive, on incorpore également, de façon avantageuse, un composé basique dans l'enrobant. Par composé basique on entend désigner tous les composés qui une fois mis en solution dans l'eau sont susceptibles de lui conférer un pH supérieur à 7. Divers types de composés basiques peuvent être utilisés à cette fin.

En général, on utilise des composés contenant des atomes de silicium ou de phosphore. Des exemples de composés basiques adéquats sont les fluosilicates, les silicates et les phosphates de métaux alcalins. De bons résultats ont été obtenus avec le fluosilicate de sodium et les silicates de sodium et de potassium.

Ces composés basiques peuvent être ajoutés en quantités variables. En général, on les utilise dans des proportions telles que le rapport pondéral polylactone dérivée du polymère hydroxycarboxylé sur composé basique est compris entre 0,1 et 10 et le plus souvent entre 0,2 et 5. De bons résultats sont obtenus lorsque le composé basique est présent dans l'enrobant à raison de 0,1 à 30% de son poids.

Le polymère hydrophile peut être contenu dans l'enrobant dans des proportions variables. En général, il est présent à raison de 0,1 à 30% du poids de l'enrobant. Le plus souvent, l'enrobant contient de 0,2 à 20% en poids de polymère hydrophile.

La masse moléculaire moyenne des polymères hydrophiles que contient l'enrobant est supérieure à environ 300. Elle est en général comprise entre 2 000 et 1 000 000. Les meilleurs résultats ont été obtenus lorsqu'elle est comprise entre environ 5 000 et environ 800 000.

L'enrobant peut également contenir des charges de type organique ou minéral. On peut également y incorporer des mélanges de charges. Les charges sont des poudres fines ayant en général une granulométrie telle qu'elles passent au travers d'un tamis de 170 et de préférence de 325 mesh (U.S. Standard). Comme charges de type organique on utilise en général des produits naturels à base de cellulose tels que la poudre dérivée du bois ou la farine de tourbe. Comme charges de type inorganique ou minéral on utilise des produits à base de silice, de silicates, de carbonates, de sels de calcium. On utilise en général des charges choisies parmi la silice broyée ou précipitée, le sable broyé, la bentonite, le talc, le kaolin, les terres à diatomées, les terres à foulon, la vermiculite, l'argile, le calcaire, la craie, le carbonate de calcium, l'oxyde de calcium, l'hydroxyde de calcium, le plâtre et leurs mélanges. Certaines de ces charges sont déjà présentes dans le composé peroxydé de départ. Il en est ainsi des sels de calcium lorsque le composé peroxydé est le peroxyde de calcium. D'autres charges non phytotoxiques peuvent également convenir. La teneur en charges peut varier dans de très larges limites. Elle est en général comprise entre 0 et 99% du poids total de l'enrobant et de préférence entre 0,1 et 99% du poids total de l'enrobant. Des teneurs comprises entre 1 et 98% conviennent bien.

L'enrobant peut également contenir un ou plusieurs autres additifs tels que des adhésifs autres que les polymères hydrophiles de l'invention, des agents permettant de préserver les semences contre les effets nocifs des herbicides sélectifs, des agents fongicides, désinfectants, nutritifs (engrais), insecticides, des agents susceptibles d'améliorer la germination et la qualité des produits, etc.

Ces additifs peuvent être présents dans des proportions variables pouvant aller jusqu'à 20% du poids de l'enrobant. La teneur en ces autres additifs est en général comprise entre 0 et 10% du poids de l'enrobant.

Des enrobants particulièrement avantageux peuvent ainsi contenir

— de 1 à 90% en poids de composés peroxydés tel que le peroxyde de calcium
— de 1 à 98% en poids de charges
— de 0 à 10% en poids d'additifs divers, et
— de 0,1 à 30% d'au moins un polymère hydrophile choisi parmi les acétates de polyvinyle partiellement hydrolysés, la polyvinylpyrrolidone, les alkylhydroxyalkylcelluloses, les polymères constitués du produit hydrolysé de greffage du nitrile acrylique sur l'amidon et les mélanges de polylactone dérivée de l'acide poly-alpha-hydroxyacrylique avec des composés basiques.

La quantité totale d'enrobant mise en oeuvre peut varier dans de larges limites. En général, elle est comprise entre 1 et 2 000% du poids de semences à enrober selon le type de semences, leurs formes et leurs dimensions.

Une technique utilisable pour enrober les semences consiste à humidifier la surface externe des semences au moyen d'une solution aqueuse, contenant un agent capable de limiter le gonflement des semences, à appliquer sur les semences ainsi humidifiées l'enrobant solide, et à sècher la semence enrobée. L'humidification des semences peut se faire par exemple par pulvérisation.

Les agents capables de limiter le gonflement des semences sont en général choisis parmi les aldoses et les composés basiques; certains polymères hydrophiles comme les esters polyvinyliques totalement ou partiellement hydrolysés tels que les produits hydrolysés à moins de 95% peuvent également jouer ce rôle. La nature de l'agent permettant de contrôler le gonflement des semences est choisie en fonction de la nature du polymère hydrophile présent dans l'enrobant. Lorsqu'il s'agit d'une polylactone dérivée d'un acide polyhydroxycarboxylique, on choisit en général le composé basique tel que défini ci-avant et plus particulièrement le fluosilicate ou le silicate de sodium. Lorsqu'il s'agit d'un polymère dérivé des aldoses, on choisit en général un aldose monomère ou oligomère tel que le fructose, le glucose ou le saccharose, ou un ester polyvinylique hydrolysé à 40—90%.

Ces solutions aqueuses peuvent contenir des quantités variables d'agents capables de limiter le gonflement des semences. En général leur concentration est relativement élevée et est au moins égale à 3% du poids de la solution. La concentration maximale en agent capable de limiter le gonflement correspond à la saturation de sa solution aqueuse.

Les agents permettant de contrôler le gonflement des semences peuvent être mis en oeuvre dans des proportions variables pouvant aller jusqu'à 20% du poids de l'enrobant.

La quantité de solution aqueuse utilisée pour humidifier les semences est variable. En général, elle est comprise entre 1 et 20% du poids des semences.

Les semences humidifiées sont traitées par le mélange de constituants enrobants dans divers types d'appareils connus en eux-mêmes et convenant pour l'agglomération. Des granulateurs tels que des soles tournantes peuvent ainsi être utilisées. L'enrobant est en général mis en oeuvre sous forme d'un mélange de particules de petites dimensions, de préférence sous forme de poudre. Les dimensions moyennes des particules d'enrobant solide sont en général inférieures à 100 microns.

L'autre technique consiste à traiter les semences au moyen d'une phase aqueuse contenant un agent susceptible de former à la surface de la semence un film imperméable et ensuite, après formation du film à enrober les semences avec l'enrobant solide. Cette technique est avantageusement utilisée pour enrober les semences dont l'exocarpe est particulièrement susceptible d'absorber très rapidement de grandes quantités d'eau telles que des semences de légumineuses ou des semences mal protégées comme le maïs et les crucifères (radis, etc).

Ces agents susceptibles de former un film imperméable sont choisis parmi les polymères hydrophiles de l'invention et leurs mélanges. Ils sont choisis de préférence parmi ceux capables de former à la surface de la semence un film poreux aux gaz mais peu poreux à l'eau et plus particulièrement un film souple capable de se contracter dans les mêmes proportions que la semence au cours de l'étape de séchage. Ils peuvent être solubles ou insolubles dans l'eau. Lorsqu'ils sont solubles dans l'eau ils sont de préférence choisis parmi les composés dont la vitesse de dissolution dans l'eau est faible.

A titre d'exemples de polymères hydrophiles utilisables pour réaliser le film imperméable, on peut citer les polymères d'esters vinyliques totalement ou partiellement hydrolysés et plus particulièrement ceux hydrolysés à moins de 95% et les acides poly-alpha-hydroxyacryliques, leurs sels de métaux alcalins et d'ammonium et les lactones qui en dérivent. De bons résultats ont été obtenus avec les acétates de polyvinyle hydrolysés à 40—95%.

Le poids des films mis en oeuvre selon l'invention peut varier dans de larges limites. En général, on préfère les utiliser en petites quantités, le plus souvent à raison de 0,01 à 10% du poids des semences à traiter. De bons résultats ont été obtenus en utilisant de 0,1 à 5%.

Les films sont avantageusement obtenus à partir d'une solution, d'une émulsion ou d'une suspension aqueuse. En général, on utilise des mélanges aqueux contenant au moins 1% de matière sèche par rapport au poids de mélange. Le plus souvent, cette proportion est comprise entre 5 et 50%. Les mélanges aqueux utilisés selon l'invention peuvent contenir d'autres constituants que le constituant essentiel du film imperméable à l'eau de préférence à raison de moins de 5% par rapport au poids du constituant essentiel.

Les semences peuvent être traitées par le mélange aqueux dans divers types d'appareils connus en eux-mêmes et convenant pour l'enrobage. Des granulateurs comme les tambours rotatifs, les soles tournantes, etc peuvent ainsi être utilisés. De préférence, les semences après le traitement par le mélange aqueus sont séchées avant d'être soumises à l'enrobage proprement dit. En général, on les sèche suffisamment pour ramener la teneur en humidité résiduaire des semences à une valeur égale ou voisine de la teneur en humidité des semences avant traitement. De bons résultats ont été obtenus lorsque la teneur en humidité des semences recouvertes d'un film imperméable à l'eau selon l'invention ne dépasse pas 130% en poids de la teneur en humidité des semences de départ. Le séchage des semences selon le procédé de l'invention est important. En effet, il permet aux semences qui ont au cours du traitement subi un gonflement de reprendre leurs dimensions initiales. Le film constitue une protection contre la pénétration ultérieure dans les semences de certains produits avec lesquels elles sont en contact au cours de l'enrobage. On peut ainsi éviter la pénétration dans la semence de certains enrobants qui présentent certaines propriétés intéressantes (amélioration de la germination, pouvoir insecticide, etc), mais qui, s'ils pénétrent dans la semence elle-même peuvent avoir un effet phytotoxique. On prévient également ainsi la pénétration d'eau dans la semence et on évite un nouveau gonflement de sorte qu'on obtient une meilleure fixation ultérieure des enrobants avec amélioration de l'adhérence et de la solidité.

Le séchage peut se faire selon toute technique connue en elle-même telle que par passage d'un courant d'air forcé éventuellement chauffé sur les semences qui peuvent être disposées à cette fin dans des appareils tels que des tamis, ou encore par séchage par ventilation naturelle.

Les semences recouvertes d'un film imperméable à l'eau sont ensuite enrobées, en général dans un appareil convenant pour la granulation.

Cet enrobage se fait en général en présence d'une phase aqueuse qui peut être de l'eau ou une solution aqueuse, plus particulièrement une solution des polymères hydrophiles de l'invention. L'enrobant est quant à lui avantageusement mis en oeuvre sous forme de poudre.

On donne ci-après des exemples de compositions enrobantes particulièrement adéquates. Parce qu'on traite les semences avec une phase aqueuse contenant des agents capables de limiter le gonflement des semences ou des agents susceptibles de former un film imperméable, on tient compte des proportions mises en oeuvre pour déterminer les quantités totales d'enrobant solide à mettre en oeuvre à la granulation.

La composition I contient:

— de 1 à 90% en poids de peroxyde de calcium
— de 0,5 à 20% en poids de polylactone dérivée de l'acide poly-alpha-hydroxyacrylique
— de 0,5 à 30% en poids de composés basiques tel que le fluosilicate de sodium, ou le silicate de sodium ou leurs mélanges
— de 1 à 98% en poids de charges diverses telles que le carbonate, l'oxyde, l'hydroxyde ou le sulfate de calcium
— de 0 à 10% en poids d'esters polyvinyliques partiellement ou totalement hydrolysés et
— de 0 à 5% en poids d'additifs divers.

La composition II contient:

— de 1 à 90% en poids de peroxyde de calcium
— de 0,1 à 10% en poids d'esters polyvinyliques hydrolysés à 40—90%
— de 0 à 25% en poids d'aldoses tels que le saccharose ou le glucose
— de 1 à 98% en poids de charges diverses telles que le carbonate, l'oxyde, l'hydroxyde ou le sulfate de calcium, la silice précipitée, le kaolin ou leurs mélanges, et
— de 0 à 5% en poids d'additifs divers.

La composition III contient:

— de 1 à 90% en poids de peroxyde de calcium
— de 0,1 à 10% en poids de celluloses substituées ou non telles que les alkylhydroxyalkylcelluloses, plus particulièrement la méthylhydroxyéthylcellulose ou la méthylhydroxypropylcellulose
— de 0 à 20% en poids d'un agent pour le contrôle du gonflement des semences tel que le glucose, le saccharose ou les esters polyvinyliques partiellement ou totalement hydrolysés et
— de 1 à 98% en poids de charges diverses telles que le carbonate, l'oxyde, l'hydroxyde ou le sulfate de calcium, le talc ou leurs mélanges
— de 0 à 5% en poids d'additifs divers.

La composition IV contient:

— de 1 à 90% en poids de peroxyde de calcium
— de 0,1 à 10% en poids d'un polymère constitué du produit hydrolysé de greffage de nitrile acrylique sur l'amidon
— de 0 à 20% en poids d'un agent pour le contrôle du gonflement des semences tel que le fructose, le glucose, le saccharose, les esters polyvinyliques totalement ou partiellement hydrolysés et les composés basiques, plus particulièrement le fluosilicate et le silicate de sodium
— de 1 à 98% en poids de charges diverses telles que le carbonate, l'oxyde, l'hydroxyde ou le sulfate de calcium, le talc, le kaolin, la silice, la vermiculite ou leurs mélanges
— de 0 à 5% d'additifs divers.

La composition V contient:

— de 1 à 90% en poids de peroxyde de calcium
— de 0,1 à 15% en poids de polyvinylpyrrolidone
— de 0 à 10% en poids d'esters polyvinyliques partiellement hydrolysés
— de 1 à 98% en poids de charges diverses telles que le carbonate, l'oxyde, l'hydroxyde ou le sulfate de calcium, le talc, le kaolin, la silice, la vermiculite ou leurs mélanges, et
— de 0 à 5% en poids d'additifs divers.

L'invention peut être appliquée à divers types de semences, telles que les semences de légumineuses, de graminées ou de dicotylédones. En général, on l'utilise pour les semences de légumineuses telles que les diverses sortes de pois, de haricots et de lentilles, la luzerne, le trèfle, la vesce, le soja, l'arachide, la féverole et le lupin, les semences de graminées telles que le ray grass et les céréales (maïs, avoine, seigle, froment, millet, sorgo, orge, riz, etc), les semences de dicotylédones telles que la chicorée, la laitue, le tabac, la tomate, la carotte, les choux et le colza et les semences de crucifères telles que le radis.

Afin d'illustrer l'invention sans pour autant en limiter la portée, on donne ci-après des exemples pratiques de réalisation.

Exemples 1 à 14

*Germination des petits pois*

La technique consiste à humecter des semences de petits pois au moyen d'une solution aqueuse (composition a) à raison de 10 ml de solution par 100 g de semences.

Les semences humides sont ensuite traitées dans un granulateur au moyen d'une poudre d'enrobant (composition b).

Trois poudres d'enrobant (composition b) ont été essayées dont les compositions sont données ci-après.

Poudre F1

| Constituants | g/100 g |
|---|---|
| peroxyde de calcium à 80% | 90 |
| polylactone de l'acide poly-alpha-hydroxyacrylique | 5 |
| $Na_2SiF_6$ | 5 |

Poudre F2

| Constituants | g/100 g |
|---|---|
| peroxyde de calcium à 60% | 60 |
| produit hydrolysé de greffage de nitrile acrylique sur l'amidon (H—SPAN) | 1,07 |
| Kaolin | 5,4 |
| Silice | 0,53 |
| Vermiculite | 10 |
| Talc | 23 |

Poudre F3

| Constituants | g/100 g |
|---|---|
| peroxyde de calcium à 60% | 72,3 |
| talc | 24,3 |
| methylhydroxyéthylcellulose (2000 cps) | 2,9 |

Après enrobage, les semences sont légèrement humectées par un peu d'eau et sont séchées rapidement.

Les semences enrobées sont mises à germer soit en boîte de PETRI sur papier filtre humide (essais 1 à 10) soit sur sable humide (essais 11 à 14). Les essais de germination ont été réalisés à 293—295 K.

Les compositions utilisées pour l'enrobage et les résultats obtenus sont rassemblés aux tableaux I et II. Les essais 1 et 11 ont été réalisés à titre de comparaison sans enrobage. L'essai 2 a été réalisé également à titre de comparaison avec un enrobant ne contenant que du peroxyde de calcium à 58%; les semences avaient été au préalable humectées à l'eau déminéralisée.

TABLEAU I

Enrobage des petits pois – Culture en boîte de PETRI

| Essai n° | Enrobage | | | | Taux de germination, % | Durée de germination, jours |
|---|---|---|---|---|---|---|
| | Composition a | | Composition b | | | |
| | Soluté | Concentration de la solution, % poids | Type | dose, g/100 g semences | | |
| 1 | – | | – | | 90 | 7 |
| 2 | – | | $CaO_2$ (58%) | 50 | 0 | – |
| 3 | acétate de polyvinyle hydrolysé à 88% | 4 | F1 | 20 | 100 | 3 – 4 |
| 4 | $Na_2SiF_6$ | 5 | F1 | 20 | 100 | 3 – 4 |
| 5 | $Na_2SiO_3$ | 15 | F1 | 20 | 100 | 3 – 4 |
| 6 | acétate de polyvinyle hydrolysé à 88% | 4 | F2 | 30 | 100 | 3 – 4 |
| 7 | sucre | 15 | F2 | 30 | 100 | 3 |
| 8 | $Na_2SiF_6$ | 5 | F2 | 30 | 100 | 3 – 4 |
| 9 | acétate de polyvinyle hydrolysé à 88% | 4 | F3 | 30 | 90–100 | 4 – 5 |
| 10 | sucre | 15 | F3 | 30 | 90–100 | 4 – 5 |

TABLEAU II

Enrobage des petits pois – Culture sur sable humide

| Essai n° | Enrobage | | | | Durée de germination, jours |
|---|---|---|---|---|---|
| | Composition a | | Composition b | | |
| | Soluté | Concentration de la solution, % poids | Type | dose, g/100 g, semences | |
| 11 | – | | – | | 7 |
| 12 | $Na_2SiF_6$ | 5 | F1 | 20 | 4 – 5 |
| 13 | sucre | 15 | F2 | 30 | 4 |
| 14 | acétate de polyvinyle hydrolysé à 88% | 4 | F3 | 30 | 4 – 5 |

Lors de la réalisation des essais 12, 13 et 14 on a constaté un effet fongicide marqué, dû à l'enrobant par rapport à l'essai 11 réalisé sans enrobant. Dans les essais 12 à 14 la croissance ultérieure des racines était 3 fois plus rapide que dans l'essai 11. Dans l'essai 12 la croissance ultérieure des tiges était 2 fois plus rapide que dans l'essai 11 et dans les essais 13 et 14 la croissance des tiges était 3 fois plus rapide que dans l'essai 11.

Exemple 15

*Germination du riz*

On humecte des semences de riz au moyen d'une solution aqueuse à 0,6% d'acétate de polyvinyle hydrolysé à 88% à raison de 10 ml de solution par 100 g de semences.

Les semences humides sont traitées dans un granulateur au moyen de 26 g d'une poudre d'enrobant par 100 g de semences sèches.

La poudre d'enrobant a la composition suivante:

| Constituants | g/100 g |
|---|---|
| peroxyde de calcium à 80% | 95 |
| polyvinylpyrrolidone | 5 |

Après enrobage, les semences sont légèrement humectées par un peu d'eau et sont séchées rapidement.

Les semences enrobées ont été mises à germer dans deux pots de 22 cm de côté contenant 13 cm de hauteur de terre et 10 cm de hauteur d'eau par dessus inondant la culture.

25 semences ont été déposées sur la terre dans chaque pot.

Les pots sont placés en salle conditionnée à 24°C et 90% d'humidité relative sous un éclairement de 10 000 lux pendant 12 h par jour.

La germination est observée après 35 jours.

Un essai témoin a été réalisé avec des semences non enrobées.

Les résultats obtenus sont donnés au tableau III ci-après.

TABLEAU III

Taux de germination, %

| | Lot 1 | Lot 2 | moyenne |
|---|---|---|---|
| semences enrobées | 68 | 96 | 82 |
| semences non enrobées | 56 | 56 | 56 |

Exemple 16

*Germination des semences de soja*

Les semences de soja sont humectées au moyen d'une solution aqueuse diluée à 4% d'acétate de polyvinyle hydrolysé à 88% de type MOWIOL 40—88 vendu par HOECHST de manière à obtenir des semences recouvertes d'un film représentant 0,24% en poids de ce produit.

Les semences humides sont mises à sécher sur un tamis au travers duquel on fait passer de l'air sec jusqu'à séchage complet.

Les semences sont ensuite traitées dans un granulateur au moyen de peroxyde de calcium (contenant 60% en poids de $CaO_2$, le solde étant constitué d'oxyde et hydroxyde de calcium) à raison de 12% calculé en $CaO_2$ pur et de polylactone d'acide poly-alpha-hydroxyacrylique à raison de 10% de polylactone par rapport au poids de semences. Au cours de la granulation on humecte régulièrement les semences au moyen d'une solution aqueuse diluée à 0,6% de MOWIOL 40—88.

Après enrobage les semences sont séchées rapidement.

Les semences enrobées sont mises à germer dans de la terre humide. Les essais de germination ont été réalisés à environ 20°C.

Dans tous les cas l'enrobant adhère très bien aux semences.

Des essais de comparaison ont été réalisés sans traitement préalable des semences au moyen de la solution de MOWIOL 40—88 avec uniquement un enrobage comme indiqué ci-avant. Dans ce cas on observe une mauvaise adhérence de l'enrobant qui se délite facilement.

Trois lots de semences ont été examinés. Les résultats obtenus sont rassemblés au Tableau IV ci-après.

TABLEAU IV

Taux de germination, %

| | Lot 1 | Lot 2 | Lot 3 | moyenne |
|---|---|---|---|---|
| Enrobage selon | | | | |
| l'invention | 100 | 60 | 100 | 87 |
| de comparaison | 90 | 20 | 100 | 70 |

Un autre essai de comparaison a été réalisé en soumettant les semences à un traitement à l'acétate de polyvinyle hydrolysé à 88% suivi d'un enrobage tel que décrit ci-avant mais sans séchage intermédiaire. On observe une mauvaise adhérence de l'enrobant avec fragilisation et délitage.

**Revendications**

1. Procédé pour l'obtention de semences enrobées au moyen d'un enrobant contenant un composé hydrophile caractérisé en ce qu'on traite les semences au moyen d'une solution aqueuse qui contient un agent capable de limiter le gonflement des semences, ou au moyen d'une phase aqueuse qui contient un agent capable de former à la surface des semences un film imperméable à l'eau, en ce qu'on enrobe les semences ainsi traitées avec un enrobant contenant un composé peroxydé et un polymère hydrophile et en ce qu'on sèche les semences enrobées ainsi obtenues.

2. Procédé selon la revendication 1 caractérisé en ce que le polymère hydrophile est choisi parmi les polymères comportant une chaîne principale contenant des atomes de carbone substitués directement ou indirectement par des groupes hydroxyles —OH, carboxyles —COO— ou carbamyles —CON<.

3. Procédé selon la revendication 1 ou 2 caractérisé en ce que le composé peroxydé est le peroxyde de calcium ou de magnésium.

4. Procédé selon l'une quelconque des revendications 1 à 3 caractérisé en ce que le polymère hydrophile est choisi parmi les polymères comportant une chaîne principale constituée essentiellement d'atomes de carbone et éventuellement d'atomes d'oxygène, les atomes de carbone étant substitués directement ou indirectement par des groupes carboxyles —COO— ou carbamyles —CON<.

5. Procédé selon la revendication 4 caractérisé en ce que le polymère hydrophile est choisi parmi les produits de greffage du nitrile acrylique sur l'amidon hydrolysés, ou parmi la polyvinylpyrrolidone, les esters polyvinyliques partiellement hydrolysés et l'acide poly-alpha-hydroxyacrylique et ses dérivés.

6. Procédé selon la revendication 5 caractérisé en ce que l'enrobant contient de 1 à 90% en poids de peroxyde de calcium, de 1 à 98% en poids de charges de 0 à 10% en poids d'additifs divers et de 0,1 à 30% d'au moins un polymère hydrophile choisi parmi les acétates de polyvinyle partiellement hydrolysés, la polyvinylpyrrolidone, les alkylhydroxyalkylcelluloses, les polymères constitués du produit hydrolysé de greffage du nitrile acrylique sur l'amidon et les mélanges de polylactone dérivée de l'acide poly-alpha-hydroxyacrylique avec des composés basiques.

7. Procédé selon l'une quelconque des revendications 1 à 6 caractérisé en ce que les semences sont humectées au moyen d'une solution aqueuse qui contient un agent pour le contrôle du gonflement des semences et en ce qu'elles sont mises, ainsi humectées, directement en contact avec l'enrobant sous forme de poudre.

8. Procédé selon la revendication 7 caractérisé en ce que l'agent pour le contrôle du gonflement des semences est choisi parmi les esters polyvinyliques partiellement hydrolysés, les aldoses, et les composés basiques.

9. Procédé selon l'une quelconque des revendications 1 à 6 caractérisé en ce que les semences sont traitées au moyen d'une phase aqueuse qui contient, comme agent capable de former à la surface des semences un film imperméable à l'eau, un polymère hydrophile de manière à recouvrir la surface des semences d'un film imperméable à l'eau avant de les mettre en contact avec la composition d'enrobage proprement dite.

10. Procédé selon la revendication 9 caractérisé en ce que l'on utilise un film dont le constituant essentiel est un dérivé de l'acide poly-alpha-hydroxyacrylique.

11. Procédé selon la revendication 9 caractérisé en ce que l'on utilise un film dont le constituant essentiel est un ester polyvinylique dont le taux d'hydrolyse est de 40 à 95%.

12. Procédé selon l'une quelconque des revendications 9 à 11 caractérisé en ce que l'on sèche les semences après le traitement au moyen de la phase aqueuse.

**Patentansprüche**

1. Verfahren zum Erzeugen umhüllter Samen mit Hilfe eines eine hydrophile Verbindung enthaltenden Umhüllungsmittels, dadurch gekennzeichnet, daß man die Samen mittels einer wässrigen Lösung behandelt, die ein Mittel enthält, welches in der Lage ist, das Aufquellen der Samen zu beschränken, oder mittels einer wässrigen Phase, die ein Mittel enthält, das in der Lage ist auf der Oberfläche der Samen einen wasserundurchlässigen Film zu bilden, daß man die so behandelten Samen umhüllt mit einem Umhüllungsmittel, welches eine Peroxydverbindung und ein hydrophiles Polymer enthält und daß man die so erhaltenen umhüllten Samen trocknet.

2. Verfahren gemäß Anspruch 1, dadurch gekennzeichnet, daß das hydrophile Polymer ausgewählt ist unter den Polymeren, die eine Hauptkette aufweisen enthaltend Kohlenstoffatome, die direkt oder indirekt durch Hydroxylgruppen—OH, Carboxylgruppen—COO— oder Carbamylgruppen—CON< substituiert sind.

3. Verfahren gemäß Anspruch 1 oder 2, dadurch gekennzeichnet, daß die Peroxydverbindung Calcium- oder Magnesiumperoxyd ist.

4. Verfahren gemäß einem der Ansprüche 1 bis 3, dadurch gekennzeichnet, daß das hydrophile Polymer ausgewählt ist unter den Polymeren, die eine Hauptkette, gebildet im wessentlichen aus Kohlenstoffatomen und gegebenenfalls Sauerstoffatomen, besitzen, wobei die Kohlenstoffatome direkt oder indirekt substituiert sind mit Carboxylgruppen—COO— oder Carbamylgruppen—CON<.

5. Verfahren gemäß Anspruch 4 dadurch gekennzeichnet, daß das hydrophile Polymer ausgewählt ist unter den Propfprodukten von Acrylnitril auf hydrolysierter Stärke, oder unter Polyvinylpyrrolidon, den teilweise hydrolysierten Polyvinylestern und Poly-$\alpha$-Hydroxyacrylsäure und ihren Derivaten.

6. Verfahren gemäß Anspruch 5, dadurch gekennzeichnet, daß das Umhüllungsmittel 1 bis 90 Gew.-% Calciumperoxyd, 1 bis 98 Gew.-% Füllstoffe, 0 bis 10 Gew.-% verschiedener Zusätze und 0,1 bis 30% mindestens eines hydrophilen Polymeren ausgewählt unter den teilweise hydrolysierten Polyvinylacetaten, Polyvinylpyrrolidon, den Alkylhydroxyalkylcellulosen, den Polymeren gebildet aus einem hydrolysierten Pfropfprodukt von Acrylnitril auf Stärke und den Mischungen von Polylacton abgeleitet von Poly-$\alpha$-Hydroxyacrylsäure mit basischen Verbindungen enthält.

7. Verfahren gemäß einem der Ansprüche 1 bis 6, dadurch gekennzeichnet, daß die Samen angefeuchtet sind mittels einer wässrigen Lösung, die ein Mittel zur Kontrolle des Aufquellens der Samen enthält, und daß sie, nachdem sie so befeuchtet sind, direkt in Kontakt mit dem Umhüllungsmittel in Form eines Pulvers gebracht werden.

8. Verfahren gemäß Anspruch 7, dadurch gekennzeichnet, daß das Mittel zur Kontrolle des Aufquellens der Samen ausgewählt ist unter den teilweise hydrolysierten Polyvinylestern, den Aldosen und den basischen Verbindungen.

9. Verfahren gemäß einem der Ansprüche 1 bis 6, dadurch gekennzeichnet, daß die Samen mittels einer wässrigen Phase behandelt werden, die als Mittel, welches in der Lage ist auf der Oberfläche der Samen einen wasserundurchlässigen Film zu bilden, ein hydrophiles Polymer enthalten, so daß auf der Oberfläche der Samen ein wasserundurchlässiger Film gebildet wird bevor diese in Berührung mit dem eigentlichen Umhüllungsmittel gebracht werden.

10. Verfahren gemäß Anspruch 9, dadurch gekennzeichnet, daß man einen Film benutzt, dessen wesentlicher Bestandteil ein Derivat von Poly-$\alpha$-Hydroxyacrylsäure ist.

11. Verfahren gemäß Anspruch 9, dadurch gekennzeichnet, daß man einen Film benutzt, dessen wesentlicher Bestandteil ein Polyvinylester mit einem Hydrolysengrad von 40 bis 95% ist.

12. Verfahren gemäß einem der Ansprüche 9 bis 11, dadurch gekennzeichnet, daß man die Samen nach der Behandlung mit der wässrigen Phase trocknet.

**Claims**

1. Process for the preparation of seeds coated with a coating agent containing a hydrophilic compound, characterised in that the seeds are treated with an aqueous solution which contains an agent capable of limiting the swelling of the seeds, or with an aqueous phase which contains an agent capable of forming a water-impermeable film on the surface of the seeds, in that the seeds treated in this way are coated with a coating agent containing a peroxide compound and a hydrophilic polymer, and in that the coated seeds thus obtained are dried.

2. Process according to Claim 1, characterised in that the hydrophilic polymer is chosen from amongst polymers possessing a main chain containing carbon atoms substituted directly or indirectly by hydroxyl groups, —OH, carboxyl groups, —COO—, or carbamoyl groups, —CON<.

3. Process according to Claim 1 or 2, characterised in that the peroxide compound is calcium peroxide or magnesium peroxide.

4. Process according to any one of Claims 1 to 3, characterised in that the hydrophilic polymer is chosen from amongst polymers possessing a main chain consisting essentially of carbon atoms and, if

appropriate, of oxygen atoms, the carbon atoms being substituted directly or indirectly by carboxyl groups, —COO—, or carbamoyl groups, —CON<.

5. Process according to Claim 4, characterised in that the hydrophilic polymer is chosen from amongst the hydrolysed products resulting from the grafting of acrylonitrile onto starch or from amongst polyvinyl pyrrolidone, partially hydrolysed polyvinyl esters and poly-alpha-hydroxyacrylic acid and its derivatives.

6. Process according to Claim 5, characterised in that the coating agent contains from 1 to 90% by weight of calcium peroxide, from 1 to 98% by weight of fillers, from 0 to 10% by weight of various additives and from 0.1 to 30% of at least one hydrophilic polymer chosen from amongst partially hydrolysed polyvinylacetates, polyvinylpyrrolidone, alkylhydroxyalkylcelluloses, polymers consisting of the hydrolysed product resulting from the grafting of acrylonitrile onto starch, and mixtures of polylactone derived from poly-alpha-hydroxyacrylic acid with basic compounds.

7. Process according to any one of Claims 1 to 6, characterised in that the seeds are moistened with an aqueous solution which contains an agent for controlling the swelling of the seeds, and in that the seeds moistened in this way are brought into direct contact with the coating agent in powder form.

8. Process according to Claim 7, characterised in that the agent for controlling the swelling of the seeds is chosen from amongst partially hydrolysed polyvinyl esters, aldoses and basic compounds.

9. Process according to any one of Claims 1 to 6, characterised in that the seeds are treated with an aqueous phase which contains a hydrophilic polymer as an agent capable of forming a water-impermeable film on the surface of the seeds, so as to cover the surface of the seeds with a water-impermeable film before bringing them into contact with the actual coating composition.

10. Process according to Claim 9, characterised in that the essential constituent of the film used is a poly-alpha-hydroxyacrylic acid derivative.

11. Process according to Claim 9, characterised in that the essential constituent of the film used is a polyvinyl ester with a degree of hydrolysis of 40 to 95%.

12. Process according to any one of Claims 9 to 11, characterised in that the seeds are dried after the treatment with the aqueous phase.